# EUROPEAN PATENT SPECIFICATION

(11) **EP 2 875 707 B1**
(45) Date of publication and mention of the grant of the patent: **15.06.2016**
(21) Application number: 14003537.9
(22) Date of filing: 15.10.2014
(51) Int. Cl.: A01B 3/46

(54) **Transporting and working system for plough of the carried type**
Transport- und Arbeitssystem für Tragpflug
Système de transport et de fonctionnement pour charrue portée

(30) Priority: 17.10.2013 IT IT20130844
(43) Date of publication of application: 27.05.2015
(73) Proprietor: Moro Aratri S.R.L., 24056 Fontanella (BG) (IT)
(72) Inventor: Moro, Andrea, I-24056 Fontanella (BG) (IT)
(74) Representative: Garavelli, Paolo

(56) References cited:
- DE-A1- 1 632 762
- DE-A1- 2 310 712
- FR-A1- 2 376 606
- FR-A1- 2 774 852

## Description

The present invention refers to a transporting and working system for a plough of the carried type.

In the category of carried ploughs, the following combined transporting and working systems are known, which are mainly different due to their transport function according to the following table:
▪ Single pivoting wheel (with rigid head)
▪ Pivoting cart with two wheels (with rigid head)
▪ Fixed cart with two fixed wheels fisse (with steering head)

The following further solutions deal with known systems which are useful only for the transport:
▪ Separate transporting cart, to be removed when working, with two fixed wheels (steering head)
▪ Single pivoting wheel used only in the transporting phase (rigid head)

Such solutions all have a rather limited coverage and are not fully efficient for the users.

Document DE-A1-16 32 762 discloses a system according to the preamble of Claim 1.

Object of the present invention is solving the above prior art problems, by providing a transporting and working system for plough of the carried type, which is made as system having a double transporting and working function with the peculiarity of having:
- single fixed, non-pivoting wheel (it is possible to also provide a twin pair of wheels to increase the abutment surface and the carried load) coupled with the steering head.

The advantage with respect to all pivoting versions (both with wheel and with cart) mainly deals with the following features:
▪ the tractor-plough assembly during the bends, in the transporting phase, has the chance of being loosened, avoiding the "waving" motion;
▪ the pivoting wheel is very sensitive to road irregularities, generating frequent wheel oscillations, which cause direction variations also to the tractor.

The advantage with respect to the version with cart with fixed wheels (with steering head) mainly deals with:
▪ chance of using wheels with a greater diameter (in the system with cart the two wheels in the working phase cannot be big since they would mutually touch);
▪ chance of performing the plough transport also in vertical position (particularly useful for non-reversible ploughs, since generally they have not the chance of a horizontal positioning);
▪ easily making variations with further functionalities (hydraulic or automatic regulation of the working depth or possible wheel dampening system).

The above and other objects and advantages of the present invention, as will result from the following description, are obtained with a transporting and working system for plough of the carried type as claimed in claim 1. Preferred embodiments and non-trivial variations of the present invention are the subject matter of the dependent claims.

It is intended that all enclosed claims are an integral part of the present description.

The present invention will be better described by some preferred embodiments thereof, provided as a non-limiting example, with reference to the enclosed drawings, in which:

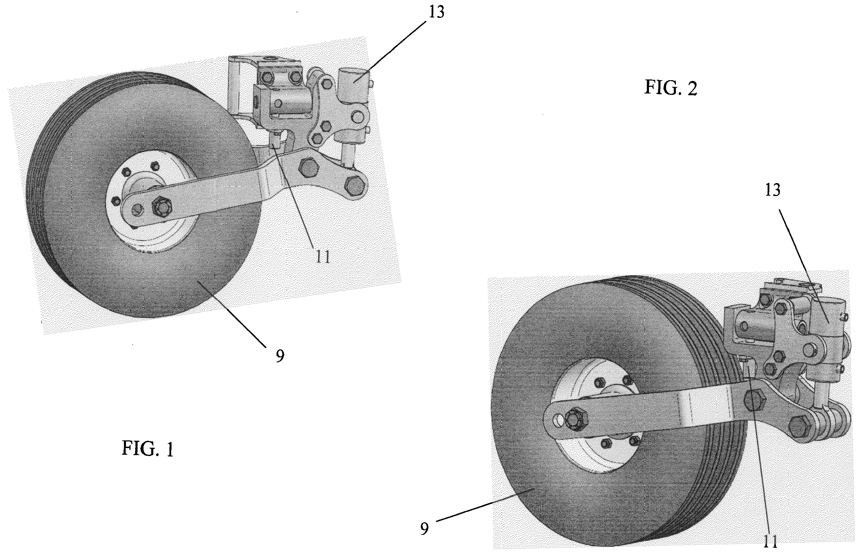

- Figure 1 is a view of a part of a preferred embodiment of the wheel of the system of the present invention;
- Figure 2 is a view of a part of the wheel similar to Figure 1 made from another angle;

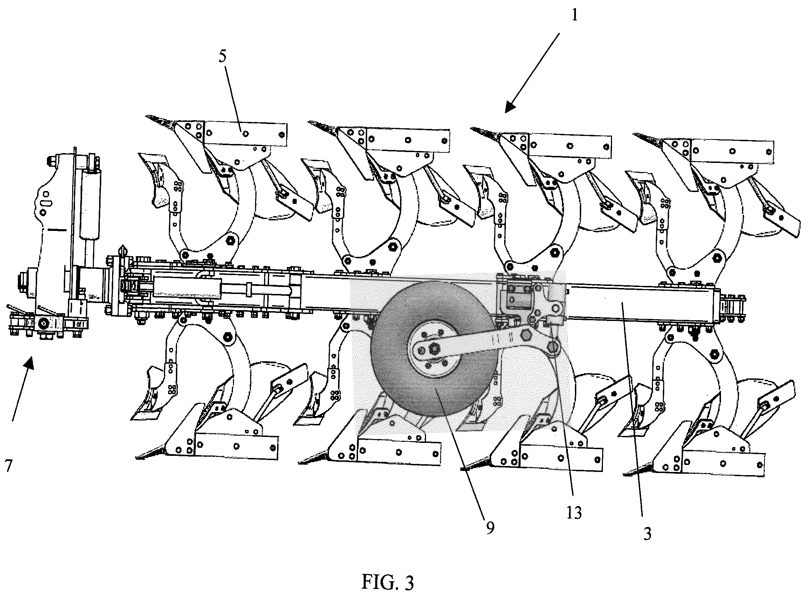

- Figure 3 is a side assembly view of the system of the invention in its working position;
- Figure 4 is a perspective view of the system of the invention in its working position;

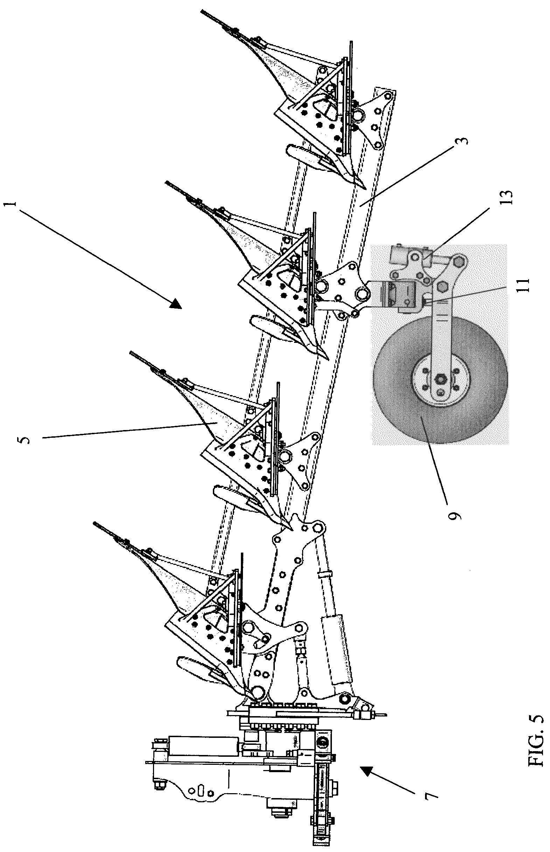

- Figure 5 is a side assembly view of the system of the invention in its transport position; and
- Figure 6 is a perspective view of the system of the invention in its transport position.

With reference to the Figures, a preferred embodiment of the present invention is shown and described. It will be immediately obvious that numerous variations and modifications (for example related to shape, sizes, arrangements and parts with equivalent functionalities) could be made to what is described, without departing from the scope of the invention as appears from the enclosed claims.

With reference to the Figures, the transporting and working system for plough 1 of the carried type of the present invention substantially comprises:
- at least one supporting structure 3 of the ploughshares 5 of the plough 1;
- at least one head 7 connected on one side to the supporting structure 3 and on another side to tractor means of the plough 1; and
- at least one wheel 9 connected to the supporting structure 3 and adapted, during the transporting phase of the plough 1, to assume a non-pivoting operating position for the transport while the head 7 assumes a steering position with respect to the tractor means, and, during the working phase of the plough 1, to assume an operating working position to keep a correct working depth of the plough 1 by alternating the right or left position in synchronism with the working side of the plough 1, while the head 7 assumes a fixed or half-fixed positions with respect to the tractor means.

Preferably, the wheels 9 are two, and are made as twins to increase the abutment surface and the carried load.

Moreover, during the working phases, b overturning the plough 1 from the right side to the left side and vice versa, the wheel 9 is adapted to change its own position to be adapted to the correct working side, through a lateral half-rotation with respect to the plough 1, namely with the rotation axis which is parallel to the running direction, instead of being perpendicular.

As operating improvement, the inventive system can be further equipped with a blocking device 11 (preferably of the hydraulic or mechanical type) of the wheel 9 upon reaching the correct position, in which such blocking device 11 is preferably a piston equipped with blind inserting holes, or a solution equipped with levers and connecting rods (not shown).

According to a variation, the inventive system can further be equipped with an oil-dynamic actuator 13, preferably of the piston type, adapted to regulate the working depth with a command from the tractor means, and to adjust the distance of the plough from the ground during the transport.

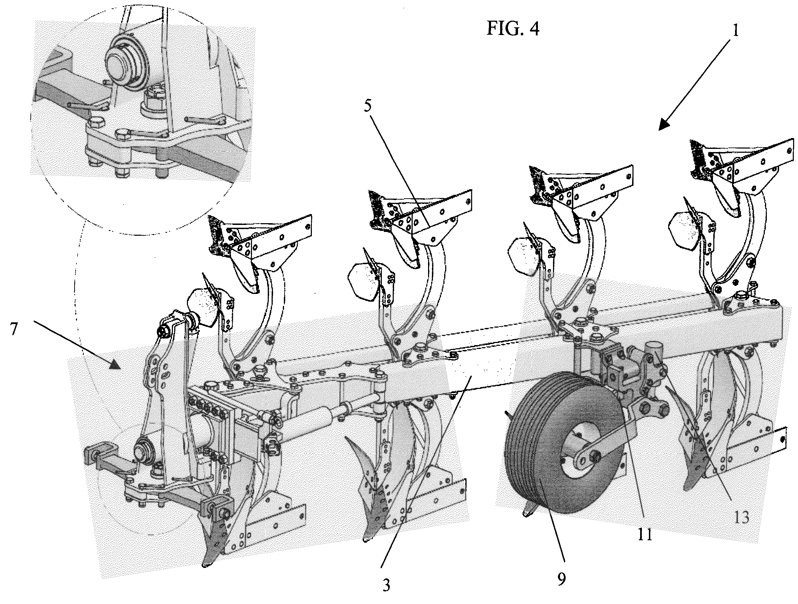

According to the inventive arrangement of the system, therefore, the head 7 is adapted to assume a fixed or half-fixed position, in order not to allow, or allow in a limited way, the rotation with respect to the tractor means referred to a vertical axis with respect to the ground, as can be seen in Figure 4 in the view with inserted pegs.

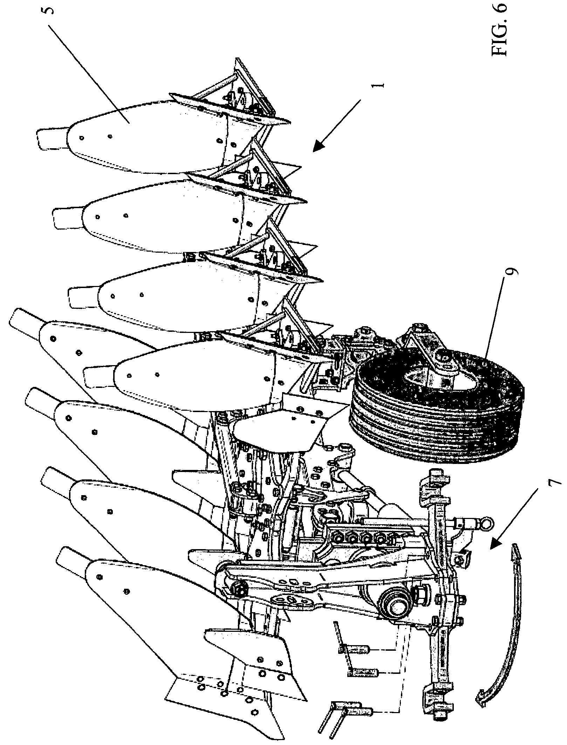

Similarly, the head 7 is adapted to assume a steering position, such as to allow the rotation with respect to the tractor means referred to a vertical axis with respect to the ground, in order to consider the tractor-plough connection as articulated, as can be seen in Figure 6 in the situation with removed pegs.

## Claims

1. Transporting and working system for plough (1) of the carried type, said system comprising:
- at least one supporting structure (3) of the ploughshares (5) of the plough (1); and
- at least one head (7) connected on one side to said supporting structure (3) and on another side to tractor means of said plough (1);
- a wheel (9) connected to said supporting structure (3) and adapted, during the transporting phase of said plough (1), to assume a non-pivoting operating position for the transport while said head (7) assumes a steering position with respect to the tractor means, and, during the working phase of said plough (1), to assume an operating working position to keep a correct working depth of the plough (1) by alternating the right or left position in synchronism with the working side of the plough (1), while said head (7) assumes a fixed or half-fixed positions with respect to the tractor means, during the working phases, by overturning the plough (1) from the right side to the left side and vice versa, the wheel (9) being adapted to change its own position to be adapted to the correct working side, through a lateral half-rotation with respect to the plough (1), **characterized in that** the rotation axis is parallel to the running direction, instead of being perpendicular; and **in that**
- a blocking device (11) for blocking further rotation of the wheel (9) about said axis upon reaching the correct position after the half-rotation.

2. System according to claim 1, **characterized in that** said wheels (9) are two, and are made as twins to increase the supporting surface and distribute carried load.

3. System according to any one of the previous claims, **characterized in that** said blocking device (11) is a piston equipped with blind inserting holes.

4. System according to any one of claims 1 to 2, **characterized in that** said blocking device (11) is equipped with levers and connecting rods.

5. System according to claim 3 or 4, **characterized in that** said blocking device (11) is of the hydraulic or mechanical type.

6. System according to any one of the previous claims, **characterized in that** it is further equipped with an oil-dynamic actuator (13), preferably of the piston type, adapted to adjust the working depth with a command from the tractor means.

7. System according to any one of claims 1 to 5, **characterized in that** it is further equipped with an oil-dynamic actuator (13), preferably of the piston type, adapted to adjust the distance of the plough (1) from the ground during the transport.

8. System according to any one of the previous claims, **characterized in that** said head (7) is adapted to assume a fixed or half-fixed position during the working phase, in order not to allow, or allow in a limited way, the rotation with respect to the tractor means referred to a vertical axis with respect to the ground.

9. System according to any one of the previous claims, **characterized in that** said head (7) is adapted to assume a steering position during the transporting phase, such as to allow the rotation with respect to the tractor means referred to a vertical axis with respect to the ground, in order to consider the tractor-plough connection as articulated.

## Patentansprüche

1. Transport- und Betriebssystem für getragenen Pflug (1), das genannte System schließt Folgendes ein:
- mindestens eine Tragstruktur (3) der Schare (5) des Pfluges (1); und
- mindestens einen Kopf (7), der auf einer Seite mit der genannten Tragstruktur (3) und auf der anderen Seite mit Zugvorrichtungen des genannten Pfluges (1) verbunden ist;
- ein Rad (9), das mit der genannten Tragstruktur (3) verbunden ist, und dazu dient, während der Transportphase des genannten Pfluges (1) eine nicht bewegliche Betriebsposition für den Transport einzunehmen, während der genannte Kopf (7) eine Lenkposition gegenüber den Zugvorrichtungen einnimmt, und während der Betriebsphase des genannten Pfluges (1) dazu dient, eine Betriebsposition für die Arbeit einzunehmen, um eine korrekte Arbeitstiefe des Pfluges (1) beizubehalten, wobei er die Position auf der rechten oder linken Seite synchronisiert mit der Arbeitsseite des Pfluges (1) abwechselt, während der genannte Kopf (7) während der Betriebsphasen eine feste oder halbfeste Position gegenüber den Zugvorrichtungen einnimmt und den Pflug (1) von der rechten auf die linke Seite kippt und umgekehrt, das Rad (9) dient dazu, seine Position zu ändern, um sich durch eine seitliche Halbdrehung gegenüber dem Pflug (1) an die korrekte Arbeitsseite anzupassen, und ist **dadurch gekennzeichnet, dass** die Drehachse parallel anstatt senkrecht zur Fahrtrichtung ist; und dadurch,
- eine Blockiervorrichtung (11) zu haben, um die weitere Drehung des Rades (9) im Bereich der genannten Achse bei Erreichen der korrekten Position nach der Halbdrehung zu blockieren.

2. System gemäß Patentanspruch 1, das **dadurch gekennzeichnet ist, dass** die genannten Räder (9) zwei Zwillingsräder sind, um die Auflagefläche zu erhöhen und die Traglast zu verteilen.

3. System gemäß einem beliebigen der vorhergehenden Patentansprüche, das **dadurch gekennzeichnet ist, dass** die genannte Blockiervorrichtung (11) ein Kolben ist, der mit Blindbohrungen für die Einführung ausgestattet ist.

4. System gemäß einem beliebigen der Patentansprüche von 1 bis 2, das **dadurch gekennzeichnet ist, dass** die genannte Blockiervorrichtung (11) mit Hebeln und Pleueln ausgestattet ist.

5. System gemäß Patentanspruch 3 oder 4, das **dadurch gekennzeichnet ist, dass** die genannte Blockiervorrichtung (11) hydraulisch oder mechanisch ist.

6. System gemäß einem beliebigen der vorhergehenden Patentansprüche, das **dadurch gekennzeichnet ist, dass** es außerdem mit einem öldynamischen Antrieb (13), vorzugsweise mit Kolben, ausgestattet ist, der dazu dient, die Arbeitstiefe mit einer Steuerung der Zugvorrichtungen einzustellen.

7. System gemäß einem beliebigen der Patentansprüche von 1 bis 5, das **dadurch gekennzeichnet ist, dass** es außerdem mit einem öldynamischen Antrieb (13), vorzugsweise mit Kolben, ausgestattet ist, der dazu dient, den Bodenabstand des Pfluges (1) während des Transports einzustellen.

8. System gemäß einem beliebigen der vorhergehenden Patentansprüche, das **dadurch gekennzeichnet ist, dass** der genannte Kopf (7) dazu dient, eine feste oder halbfeste Position während der Arbeitsphase einzunehmen, die ihm nicht oder nur begrenzt die Drehung gegenüber den Zugvorrichtungen ermöglicht, die auf eine vertikale Achse zum Boden bezogen ist.

9. System gemäß einem beliebigen der vorhergehenden Patentansprüche, das **dadurch gekennzeichnet ist, dass** der genannte Kopf (7) dazu dient, eine Lenkposition während der Transportphase einzunehmen, die die Drehung gegenüber den Zugvorrichtungen ermöglicht, die auf eine vertikale Achse zum Boden bezogen ist, sodass die Traktor-Pflugverbindung als Gelenkverbindung betrachtet wird.

## Revendications

1. Système de transport et de travail pour charrue portée (1), ce système comprend :
- au moins une structure de support (3) des socs (5) de la charrue (1) ; et
- au moins une tête (7) reliée d'un côté à la structure de support (3) et de l'autre côté aux moyens tracteurs de la charrue (1) ;
- une roue (9) reliée à la structure de support (3) et apte, pendant la phase de transport de la charrue (1), à prendre une position opérationnelle non pivotante pour le transport tandis que la tête (7) prend une position directrice par rapport aux moyens tracteurs et, pendant la phase de travail de la charrue (1), apte à prendre une position opérationnelle de travail pour maintenir la profondeur de travail correcte de la charrue (1) en alternant la position à droite ou à gauche en synchronie avec le côté de travail de la charrue (1), tandis que la tête (7) prend une position fixe ou semi-fixe par rapport aux moyens tracteurs, pendant les phases de travail, en renversant la charrue (1) du côté droit vers le côté gauche et inversement, la roue (9) est en mesure de changer sa position pour s'adapter au côté de travail correct, à travers une semi-rotation latérale par rapport à la charrue (1), **caractérisé en ce que** l'axe de rotation est parallèle à la direction de marche, au lieu d'être perpendiculaire ; et **en ce qu'**il possède
- un dispositif de blocage (11) pour bloquer l'ultérieure rotation de la roue (9) autour de l'axe quand la position correcte est atteinte après la semi-rotation.

2. Système, selon la revendication 1, **caractérisé en ce que** les roues (9) sont au nombre de deux et sont jumelées pour augmenter la surface d'appui et distribuer la charge de portée.

3. Système, selon l'une des revendications précédentes, **caractérisé en ce que** le dispositif de blocage (11) est un piston doté de trous d'insertion aveugles.

4. Système, selon l'une des revendications de 1 à 2, **caractérisé en ce que** le dispositif de blocage (11) est doté de leviers et de bielles.

5. Système, selon la revendication 3 ou 4, **caractérisé en ce que** le dispositif de blocage (11) est du type hydraulique ou mécanique.

6. Système, selon l'une des revendications précédentes, **caractérisé en ce qu'**il est doté aussi d'un actionneur oléodynamique (13), de préférence du type à piston, apte à régler la profondeur de travail avec une commande lancée à partir des moyens tracteurs.

7. Système, selon l'une des revendications de 1 à 5, **caractérisé en ce qu'**il est doté aussi d'un actionneur oléodynamique (13), de préférence du type à piston, apte à régler la distance de la charrue (1) par rapport au sol pendant le transport.

8. Système, selon l'une des revendications précédentes, **caractérisé en ce que** la tête (7) est apte à prendre une position fixe ou semi-fixe pendant la phase de travail afin de bloquer ou de permettre la rotation par rapport aux moyens tracteurs se référant à un axe vertical par rapport au terrain.

9. Système, selon l'une des revendications précédentes, **caractérisé en ce que** la tête (7) est apte à prendre une position directrice pendant la phase de transport afin de permettre la rotation par rapport aux moyens tracteurs se référant à un axe vertical par rapport au terrain afin de considérer la connexion tracteur-charrue comme articulée.
